# EUROPEAN PATENT SPECIFICATION

(11) **EP 3 166 408 B1**
(45) Date of publication and mention of the grant of the patent: **13.02.2019**
(21) Application number: 15744975.2
(22) Date of filing: 07.07.2015
(51) Int. Cl.: A01N 25/08, A01N 65/00, A01N 65/08, A01N 65/22, A01N 63/00

(54) **BIOCONTROL OF SEED-ASSOCIATED DISEASES IN SEEDLINGS**
BIOKONTROLLE VON SAMEN-ASSOZIIERTE KRANKHEITEN IN PFLANZEN
BIOCONTRÔLE DE MALADIES TOUCHANT LES SEMENCES CHEZ DES PLANTS

(30) Priority: 09.07.2014 IL 23357114
(43) Date of publication of application: 17.05.2017
(73) Proprietor: Nobactra Israel Ltd., 4493500 Sde Warburg (IL)
(72) Inventor: KRITZMAN, Giora, 4339417 Raanana (IL)
(74) Representative: J A Kemp
(86) International application number: PCT/IL2015/050701
(87) International publication number: WO 2016/005974

(56) References cited:
- EP-A1- 1 018 545
- EP-A1- 1 241 247
- WO-A1-2013/121248
- US-A1- 2012 083 412
- WIYONO S ET AL: "Improvement of the formulation and antagonistic activity of Pseudomonas fluorescens B5 through selective additives in the pelleting process", BIOLOGICAL CONTROL, SAN DIEGO, CA, US, vol. 46, no. 3, 1 September 2008 (2008-09-01), pages 348-357, XP023520728, ISSN: 1049-9644, DOI: 10.1016/J.BIOCONTROL.2008.04.020 [retrieved on 2008-05-13]
- TIANTIAN ZHOU ET AL: "Isolation and characterization ofJ12 as an antagonist againstand identification of its antimicrobial components", MICROBIOLOGICAL RESEARCH, FISCHER, JENA, DE, vol. 167, no. 7, 8 January 2012 (2012-01-08), pages 388-394, XP028522093, ISSN: 0944-5013, DOI: 10.1016/J.MICRES.2012.01.003 [retrieved on 2012-01-12]
- OLANYA O M ET AL: "Efficacy of Essential oils and biopesticides on Phytophtora infestans suppression in laboratory and growth chamber studies", BIOCONTROL SCIENCE AND TECHNOLOGY,, vol. 16, no. 9, 1 January 2006 (2006-01-01), pages 901-917, XP009179204,
- OEDJIJONO ET AL: "Isolation of bacteria antagonistic to a range of plant pathogenic fungi", SOIL BIOLOGY AND BIOCHEMISTRY, PERGAMON, OXFORD, GB, vol. 25, no. 2, 1 February 1993 (1993-02-01), pages 247-250, XP023670966, ISSN: 0038-0717, DOI: 10.1016/0038-0717(93)90034-9 [retrieved on 1993-02-01]

## Description

### TECHNOLOGICAL FIELD

The present invention concerns plant biocontrol and in particular biocontrol in seedlings against spreading of seed associated pathogens.

### BACKGROUND ART

References considered to be relevant as background to the presently disclosed subject matter are listed below:
Ronald Gitaitis and Ronald Walcott The epidemiology and management of seedborne bacterial diseases, Annual Review of Phytopathology, Vol. 45: 371-397, 2007;
Valeria Mancini and Gianfranco Romanazzi Seed treatments to control seedborne fungal pathogens of vegetable crops Pest Management Science Volume 70, Issue 6, pages 860-868, June 2014;
Acknowledgement of the above references herein is not to be inferred as meaning that these are in any way relevant to the patentability of the presently disclosed subject matter.

### BACKGROUND

Vegetable crops are frequently infected by pathogens, which can include seed-borne pathogens or seed transmitted pathogens, where the pathogen is already present within or on the seed surface, and can thus cause seed rot, seedling damping-off, or be a primary source of inoculum for seedling diseases and to the crop.

Notwithstanding the attempts to reduce seed-borne or seed transmitted (seed associated) pathogen infections by moving seed production to semiarid regions, seed-associated diseases continue to cause significant economic losses worldwide. As described in the Review by Ronald Gitaitis and Ronald Walcott [The epidemiology and management of seedborne bacterial diseases, Annual Review of Phytopathology, Vol. 45: 371-397, 2007], Infested seeds are responsible for the re-emergence of diseases of the past, movement of pathogens across international borders, or the introduction of diseases into new areas.

Treatment of vegetable seeds has been shown to prevent to some attempts plant disease epidemics caused by seed-borne pathogens. At times, treatment at the seed stage may also be useful in reducing the amounts of pesticides required to manage a disease.

Physical treatments that have already been used in the past and treatments with biopesticides, such as plant extracts, natural compounds and biocontrol agents, have proved to be effective in controlling seed-borne pathogens. These have been applied alone or in combination, and they are widely used owing to their broad spectrum in terms of disease control and production yield. In the review by Valeria Mancini and Gianfranco Romanazzi [Seed treatments to control seedborne fungal pathogens of vegetable crops Pest Management Science Volume 70, Issue 6, pages 860-868, June 2014] the effectiveness of different seed treatments against the main seed-borne pathogens of some important vegetable crops is discussed.

Document EP 1 018 545 refers to microbial agricultural antagonistic bacteria which may be combined with mineral carriers or with liquid oil carriers.

Document EP 1 241 247 describes isolated bacteria combined with agriculturally compatible carrier.

### GENERAL DESCRIPTION

The present invention provides a method for preventing spread of a seed associated disease within a population of seedlings, the method comprises providing said seedlings with an amount of a formulation obtained by mixing, until an emulsion is formed, of at least:
(a) a first component comprising particulate matter holding one or more natural oils; and
(b) a second component comprising a bacterial cocktail of at least two antagonistic bacteria.

### BRIEF DESCRIPTION OF THE DRAWINGS

In order to better understand the subject matter that is disclosed herein and to exemplify how it may be carried out in practice, embodiments will now be described, by way of non-limiting example only, with reference to the accompanying drawings, in which:
**Figures 1A-1B** are images of ***Pepper*** seedlings after treatment with the bio-control formulation of the present disclosure (Fig. 1A, *"Treated*") as compared to non-treated seedlings (Fig. 1B, *"Untreated*");

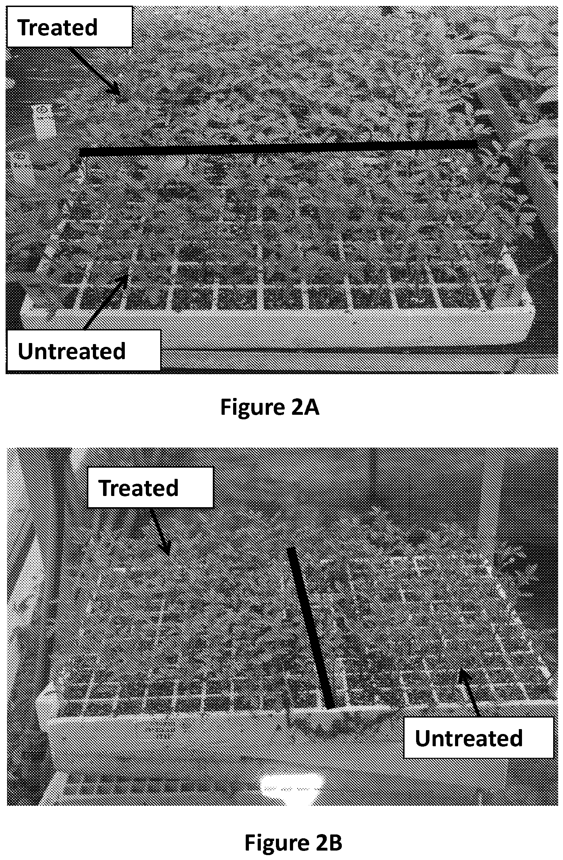

**Figures 2A-2B** are images of ***Tomatto*** seedlings after treatment with the bio-control formulation of the present disclosure (Fig. 2A, *"Ttreated*") as compared to a non-treated, control, seedlings (Fig. 2B, *"Untreated*");
**Figures 3A-3B** are images of ***Egg-Plant*** seedlings after treatment with the bio-control formulation of the present disclosure (Fig. 3A, *"Treated*") as compared to a non-treated, control, seedlings (Fig. 3B, *"Untreated*");

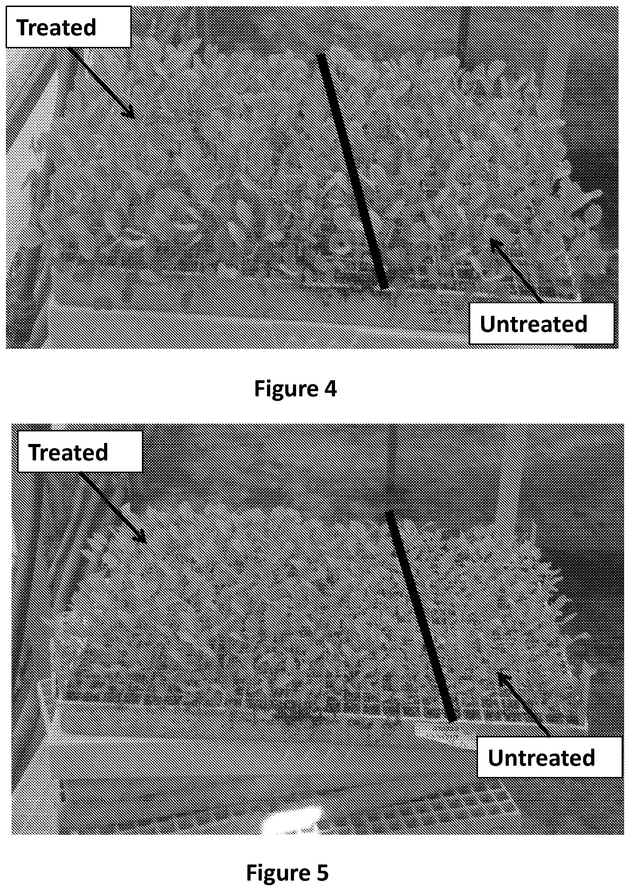

**Figure 4** is an image of ***Cabbage*** seedlings after treatment with the bio-control formulation of the present disclosure ("*Treated*") as compared to non-treated seedlings ("*Untreated*");
**Figure 5** is an image of ***Kohlrabi*** seedlings after treatment with the bio-control formulation of the present disclosure ("*Treated*") as compared to a non-treated seedlings ("*Untreated*");

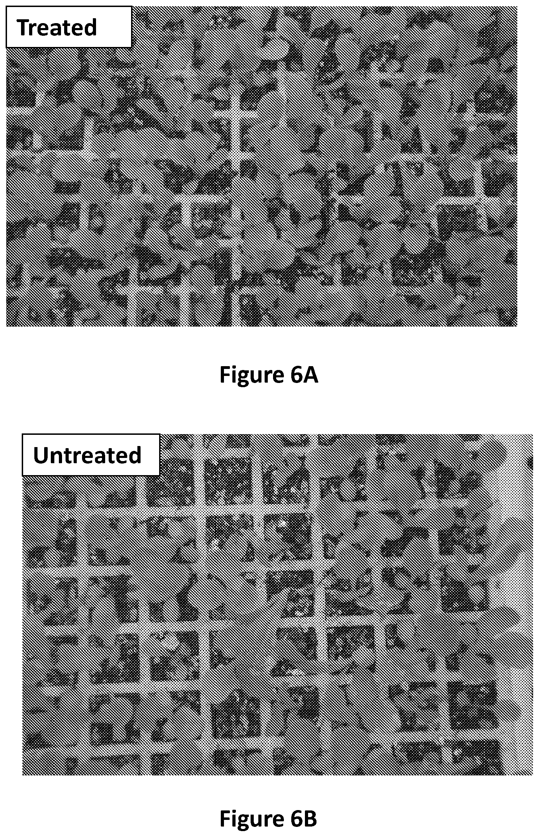

**Figures 6A-6B** are images of ***Broccoli*** seedlings after treatment with the bio-control formulation of the present disclosure (Fig. 6A, *"Treated*") as compared to a non-treated, control, seedlings (Fig. 6B, *"Untreated*");
**Figures 7A-7B** are images of ***Cauliflower*** seedlings after treatment with the bio-control formulation of the present disclosure (Fig. 7A, *"Treated*") as compared to a non-treated, control, seedlings (Fig. 7B, *"Untreated"*);

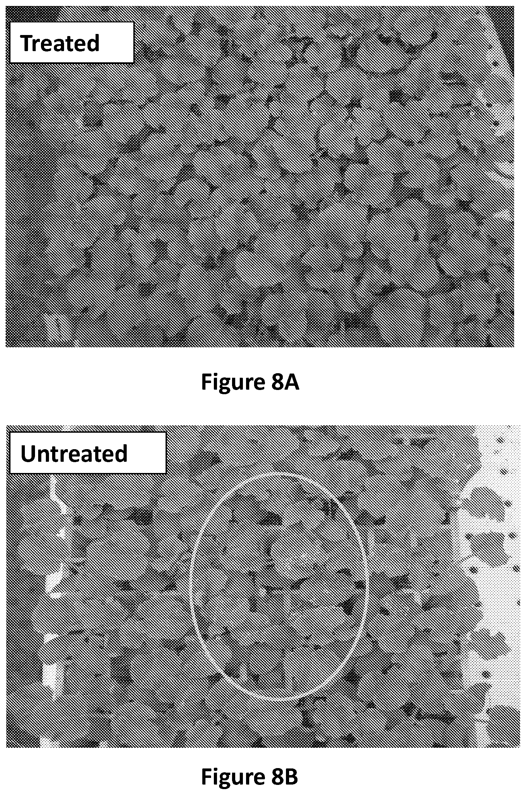

**Figures 8A** and **8B** is an image of ***Melon*** seedlings after treatment with the bio-control formulation of the present disclosure ("Treated") as compared to a non-treated seedlings ("Control");

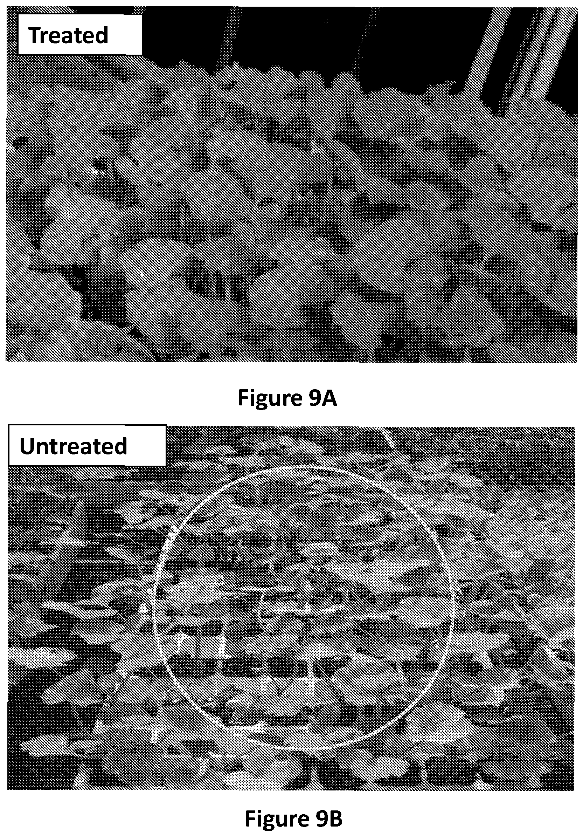

**Figure 9** is an image of ***Pumpkin*** seedlings after treatment with the bio-control formulation of the present disclosure ("*Treated*") as compared to non-treated seedlings ("*Untreated*");

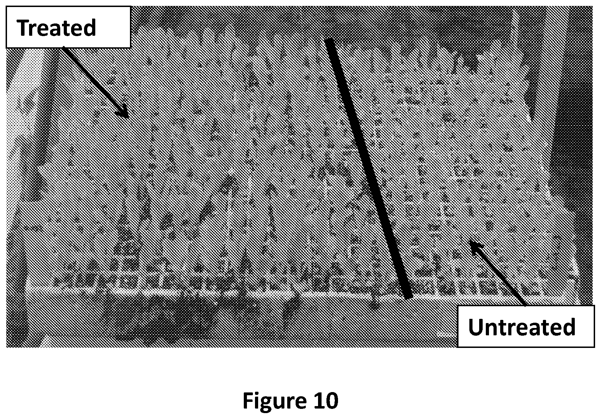

**Figure 10** is an image of ***Lettuce*** seedlings after treatment with the bio-control formulation of the present disclosure ("*Treated*") as compared to a non-treated seedlings ("*Untreated*").

### DETAILED DESCRIPTION OF EMBODIMENTS

Seedlings, whether grown from a seed or a sexual (vegetative) reproduction, need to be protected from adverse temperatures, heavy rains, drought, wind and a variety of pests and diseases. To this end, nurseries have been developed, which provide optimum conditions for the germination and subsequent growth until plants are strong enough to be planted in a permanent setting.

A nursery can be as simple as a raised bed in an open field or as sophisticated as a glass-house with micro-sprinklers and an automatic temperature control system. Concomitant to their providing suitable growth conditions for seedlings, nurseries (being a closed environment facility) may, on the other hand, provide grounds for epidemic spread of diseases, even of a seed borne or seed transmitted disease that is sourced from a single seed from the thousands of seeds being planted in the nursery.

In addition, it is noted while nurseries provide prefect environmental conditions for germination (free water, high humidity and suitable temperature), these same conditions are also optimal for development of bacterial diseases.

Further, when cultivating seedlings in a nursery irrigated by water showers, caution should be taken not to wound the seedlings skin, which may be a convenient entry way of pathogen into the plant. The water splashes from the shower may also cause spreading of pathogens to neighboring seedlings.

The present invention is aimed at providing a method of prevention of an epidemic spreading of seed-borne or seed transmitted diseases (herein collectively referred to by the term *"seed associated diseases*") in cultivated seedlings, with preference to nursery cultivated plants. When referring to *"spreading"* of a disease it is to be understood as meaning any transmission of a disease from one seedling to at least one another seedling. In this connection, it is noted that by performing the method steps, prevention of spreading of an already existing disease takes place. This can also involve treatment (reduction or elimination) of an already existing disease.

Specifically, the present disclosure provides a method for preventing spread of a seed associated disease within a population of seedlings, the method comprises providing said seedlings with an amount of a formulation obtained, by mixing prior to use, of at least:
(a) a first component comprising particulate matter holding one or more natural oils; and
(b) a second component comprising a bacterial cocktail of at least two antagonistic bacteria.

The composition of each component is described herein below and in further detail in International patent application No. PCT/IL2014/050348 bearing the publication number WO2014/170894.

Upon mixing of the first and second components a stable emulsion is obtained, which can then be diluted with water and is suitable for application onto the seedlings to be treated or protected.

The mixing of the at least two components is prior to application/delivery to the seeding or seedling population in need of thereof. In the context of the present disclosure the *"mixing prior to providing"* denotes a mixing within a time window of 48hours, at times 24hours prior to delivery to the target seedling population, further at times, within a time window of 12 hours, 9 hours, 6 hours, 5, 4, 3, 2 hours or even within the time window of one hour, e.g. minutes prior to its actual use on the seedlings. This time window is determined based on the stability of the emulsion formed by the mixing of the components, as further discussed below.

The application of the resulting formulation (emulsion) is by any technique that allows the essentially even distribution of the formulation over the population of seedlings to be treated therewith. In some embodiments, the application of the resulting biocontrol formulation is by one or combination of spraying the seedlings or irrigation of the soil. The biocontrol formulation is preferably applied in a form of fine droplets, to be achieved by any technique known in the art.

The formulation may be applied at any time during the seedling stage of the plant. When referring to *seedling stage* it is to be understood as any stage from the day the seed is placed in the soil and germination begins until the day of maturation of the seedling, namely, when the seedling starts to photosynthesize and no longer depends on the seed's energy reserves for growth.

Accordingly, the application of the biocontrol formulation may be at least once, at any day until maturation, but preferably the formulation is applied at least once from the day the seedling is exposed to light (i.e. emerges from the ground).

While a single application of the biocontrol formulation may suffice for achieving the desired effect of preventing spread of seed associated diseases, in some embodiments the formulation is applied at least twice, at times trice or even more, until the seedling is matured and ready for planting. Determining the treatment schedule may depend on a variety of features, including, *inter alia,* the type of pathogen, the tendency of the pathogen to infect (pathogenicity), the conditions of seeding etc..

The biocontrol formulation disclosed herein does not act through disinfecting of the seeds. In fact, it is a requirement that the biocontrol formulation be applied at the seedling stage, namely, at least once from the day the seedling emerges from the ground and is exposed to light. It has been found by the inventors that there is a time window for treating the seedlings such that any spreading of a disease from one seedling to others will be prevented or at least significantly reduced. Based on these findings and in accordance with some embodiments, the biocontrol formulation is provided at least once at a physiological stage of 1-2 cotyledons. This timing of first application is essential in order to obtain the desired reduction or prevention of spreading.

In some further embodiments, the biocontrol formulation is applied at least once at a physiological stage of 1-2 cotyledons and the exposure of the shoot apical meristem and the *plumule* consisting of the first *true leaves* of the young seedling.

In some embodiments, the biocontrol formulation is applied twice: (a) at the physiological stage of at least 1-2 cotyledons; and (b) several days (two or more), in some embodiments, three (3) days, after the first application. In some further embodiments, the biocontrol formulation is applied three times, twice as noted above and a third time being a day before the seedlings are taken out of the nursery, e.g. to be sent for planting in the field.

To ensure effectiveness of treatment it is preferable, but not mandatory, that the seedlings are grown/cultivated under controlled environmental conditions, including controlled temperature, controlled humidity, controlled exposure to light, controlled water supply and other parameters known in agriculture. This may be achieved, for example, by cultivating the seedlings within a plant nursery.

The biocontrol formulation may be applied to a variety of plants. In some embodiments, the biocontrol formulation is used for treatment or prevention of a disease in a vegetable or fruit plant. Without being limited thereto, the biocontrol formulation is used for treatment or prevention of a disease in seedlings of a vegetable or fruit plant selected from the plant families consisting of *Amaryllidaceae, Brassicaceae, Chenopodiaceae, Compositae, Cucurbitaceae, Gramineae, Leguminosae, Solanaceae,* and *Umbelliferae.*

In one embodiment, the biocontrol formulation is applied to a plant selected from the families as follows:
- Amaryllidaceae:: chives, garlic, leeks, onion Brussels
- Brassicaceae:: horseradish, mustard, broccoli, sprouts, cabbage, collards, cauliflower, kale, kohlrabi, radish, watercress
- Chenopodiaceae:: beet, Swiss chard, spinach
- Compositae:: endive, escarole, cardoon, artichoke, sunflower, lettuce, salsify
- Cucurbitaceae:: gourd, melon, squash, cucumber, luffa
- Gramineae:: Corn
- Leguminosae:: peanuts, peas, beans
- Solanaceae:: tomato, pepper, eggplant, potato, tomatillo
- Umbelliferae:: celery, carrot, dill, chervil, cilantro, parsley, fennel, parsnip

The application of the formulation does not necessarily take place only on a population already known to have a disease but may also be applicable for protective treatment, i.e. on a population that may potentially carry at least one seedling infected by a pathogen and which may cause spread of the disease to the entire population. In other words, in the context of the present disclosure, the population of seedlings comprises either at least one infected seedling, at least one seedling being suspected of being infected with a disease or being at risk of being infected with a disease.

In the context of the present disclosure the population of seedlings may include a plurality of seedling of the same plant as well as a population of seedlings comprising two or more plants from the same botanical family, or even, at times, two or more plants from different botanical families.

The biocontrol formulation may be applied for treatment, preferably protective treatment, of a population of seedlings for inhibiting, preventing or minimizing the spread of a seed associated disease of any pathogen origin.

Seed associated diseased may be a result of seed contamination or seed infestation. As appreciated, contamination or infestation refers to the passive relationship of a pathogens and seeds. The pathogen itself or parts of it can stick or can get mixed with the seeds during any of the processes during seed recollection: harvesting, extraction, thresh, selection and packing. Such pathogens may be pathogens that stick, by their spores, to the surface of the seed during harvest or postharvest, such as Clamidospores, Oospores, Teliospores, Uredospores, as well as bacterial cells and in some cases, virions; spores of fungi such as *Alternaria brassicae* and *A. brassicicola* in crucifers; *A. longipes* in tobacco; *A. radicina* in carrot; *Ascochyta pinodella* in pea; *Drechslera sorokiniana* and *D. oryzae* in rice; *D. avenae* in oats; *Fusarium* oxysporum f. sp. *callistephi* in China aster; *Sclerotia* of Rhizoctonia; *solani* in eggplant, pepper, and tomato; *Tilletia caries, T. foetida, T. contraversa, and Urocystis agropyri* in wheat. Each of the above disease causing pathogen is to be regarded as a separate and independent embodiment of the present disclosure.

In addition, a number of bacteria, such as the following, contaminate seed surfaces *Corynebacterium flaccumfacjens* pv. *flaccumfacjens* in bean, *Pseudomonas syringae* pv. *phaseolicola* in bean, *P. syringae* pv. *lachrymans* in cucumber, *P. syringae* pv. *tomato* in tomato, *C. rnichiganense* pv. *michiganense* in pepper, *Xanthomonas campestris* pv. *campestris* in cabbage. Also some viruses such as Tobacco mosaic virus, Tomato mosaic virus, Pepper Mosaic virus are known to contaminate seeds. Again, each of these disease causing pathogen is to be regarded as a separate and independent embodiment of the present disclosure.

In some embodiments, the pathogen causing the disease may be one selected from the non-limiting group consisting of *Enterobacteriaceae; Pseudomonadaceae; Xanthomonas (e.g. xanthomonas vesicatoria* (XV)), *Ralstonia, Acidovorax, Rhizobiaceae Agrobacterium; Clavibacter (e.g. Clavibacter michiganensis subsp. Michiganensis* (CBM)); *Streptomyces (e.g. Streptomyces scabies* (S. Scabies)); *Clostridium and Bacillus.* Each of these disease causing pathogen is to be regarded as a separate and independent embodiment of the present disclosure.

In the context of the present disclosure, the term ***"particulate matter"*** is used to denote a substance in the form of plurality of particle. The particles may be in any particulate form, including, without limited thereto, from finely rounded beads to amorphous structures. The particulate matter includes any form of a powder.

In some embodiments, the particulate matter comprise silica dioxide (SiO₂, in short referred to herein as silica). The silica may be naturally occurring silica particles such as bentonite clay beads, as well as synthetic silica beads.

In some embodiments, the particulate matter comprises synthetic silica particles. There are a variety of synthetic silica particles that may be used in the context of the present disclosure. For example, the particulate matter may comprise precipitated synthetic amorphous silica beads, such as the commercially available products Tixosil, Sipernat 50S (SiO₂, 20 µm) and Aerosil 200.

In some other embodiments, the particulate matter comprises synthetic or nature derived beads with the capacity to absorb the natural oils. Such beads may include, without being limited thereto Latex beads; calcium carbonate sorbent particle; cellulose beads; polystyrene adsorbents beads e.g. Amberlite® XAD®-2 which is a hydrophobic crosslinked polystyrene copolymer absorbent resin; charcoal; Sepharose™ beads; emulsan-alginate beads; chitosan beads; sodium alginate; styrene-maleic acid copolymer beads and styrene-divinylbenzene beads; cellulose paper beads.

To allow good distribution of the final emulsion and in accordance with some embodiments the particulate matter (particles) has a size distribution in the range of 10-25µm.

The particulate matter may also be characterized, without being limited thereto, by one or more of a surface area, in some embodiments, in the range of 400-500m² N₂/g and oil capacity in the range of 300-350 DBP/100 gram particulate.

The first component comprises the particulate matter that holds one or a combination of natural oils. In the context of the present disclosure it is to be understood that ***"natural oil"*** encompasses any organic oil obtained from nature.

The natural oil is preferably oil derived from a plant. In some embodiments, the natural oils are known as essential oils.

The essential oils are preferably those known to exhibit antimicrobial (e.g. antibacterial, antifungal, antinematodal) properties. When referring to anti-microbial properties it is to be understood as being effective against any microbial pathogen, as further discussed below. Without being limited thereto, essential oils to be used in accordance with the present disclosure, may be those derived from the plants Origanum vulgare and Origanum spp., (e.g. Oregano), Mentha spp. (mint), Thymus spp. (Thyme), Myrtus spp., Ocimun spp. (e.g. Ocimun basilicum, also klnown as Basil), Lavandula spp. (e.g. Lavender), Micromeria spp., Coriandum spp. (e.g. Coriander/Parsley), Aloysia spp., Melissa spp., Salvia spp., Petoselinum spp., Rosmarinus spp. (e.g. Rosemary), Prunella spp., Cuminum spp (e.g. Cumin).

In some other embodiments, the natural oils are plant derived oils that is used as carbon source, e.g. as food/nutrient for the antagonistic microorganisms. These are referred to herein the term ***"carbon-base oil"*** or ***"carbon-rich nutrient oil".*** In some embodiments, the carbon-base oils are vegetable oils. Without being limited thereto, the carbon-base oil is selected from the group consisting of Sesame oil, Olive oil, Peanut oil, Cottonseed oil, Soybean oil, Palm oil, sunflower oil, safflower oil, canola oil, castor oil, coconut oil, groundnut oil.

In the context of the present disclosure, when referring to ***"natural oil",*** it is to be understood as referring to a single type of oil and to a combination of oils. In some embodiments, the natural oil encompasses a combination of at least one essential oil and at least one carbon-base oil, both being of natural source.

In some embodiments, the natural oil comprises at least Oregano oil in combination with at least one carbon-base oil. The Oregano oil is combined, at times, with at least Sesame oil.

The amount of the natural oil within the first component (e.g. held by the particulate matter) may vary, depending on the type(s) of the natural oil used, the amount at loading, the type of particulate matter, the conditions of loading the natural oil onto the particulate matter, the surfactants or solvents used for loading etc.

When referring to loading of the oil onto the particulate matter, it is to be understood as meaning any form of association between the oil and the particulate matter (e.g. silica particles). Without being limited thereto, the oil is held by the particulate matter by absorption onto and/or into the particles. The association between the particles and the oil is reversible, namely, under suitable conditions, such as when brought into contact with water, the oil is easily released from the particles to form an emulsion.

In some embodiments, the particulate matter holds between 20% to 50% w/w natural oil out of the total weight of the particulate matter (after loading). This is determined by conventional techniques such as HPLC or GC chromatography, as also exemplified below. In some other embodiments, the particulate matter holds about 30% w/w natural oil ("about" encompasses a range of between 25-35%, at times between 28% to 32% or around 30%).

In some embodiments, the natural oil comprises either only the essential oil(s) or a combination of at least one essential oil and at least one carbon-base oil. As such, when referring to natural oils it is to be understood as encompassing essential oil(s) as well as carbon-base oil(s). The ratio between the at least one essential oil and at least one carbon-base oil is in the range of 60:40 and 100:0, at times the range is about 80:20.

When a combination of oils is used it is to be understood that they may be absorbed onto the particulate matter together, i.e. the same particulate matter holds more than one type of oil. In some embodiments, for ease of handling, each oil type is held separately on particulate matter such that different types of particulate matter are formed, each being characterized by the type of oil it is holding.

Thus, when referring to particular matter providing Oregano and Sesame at a ratio of 80:20 it is to be understood as a mixture of two populations of particulate matter, 80% carrying Oregano oil and 20% of a type carrying Sesame oil or a single population of particles, each particle being absorbed with the two oils at the defined or desired ratio (i.e. the oils are a priori mixed and then brought into contact with the absorbing carrier/particle). Irrespective of the oil type, the particulate matter between 20% to 50% w/w of its total weight it provided by the oil loaded thereon.

The particulate matter may also comprise at least one surfactant. As appreciated, a surfactant is a compound that lowers the surface tension of a liquid and as such, the interfacial tension between two liquids to allow the formation of, e.g. an emulsion. The surfactant may be of any kind known in the art as safe for use (e.g. non-toxic to plants or animals), including ionic surfactants, anionic surfactants, cationic surfactants as well as zwitterionic (or non-ionic) surfactants.

In some embodiments, the surfactant is of a type acceptable in organic agriculture. A non-limiting list of possible surfactants to be used in accordance with the present disclosure includes Polyethylene glycol, sorbitan trioleates (Tween, e.g. Tween 85, Tween 65, Tween R85), sorbitan fatty acid esters (e.g. Span 40), Egg Lecithin, Zohar LQ-215 (Potassium fatty acids) and Zohar PT-50 (Potassium fatty acids), Carvacrol.

In some other embodiments, the surfactant comprises a salt of a fatty acid. The salt may comprise an alkaline such as potassium, calcium, sodium salts, as well as an ammonium salt.

In some embodiments, the salt of a fatty acid comprises potassium salts of fatty acids (also known as soap salts), which are at times used as insecticides, herbicides, fungicides, and/or algaecides. In some embodiments, potassium salts of fatty acids may be obtained by adding potassium hydroxide to natural fatty acids such as those found in animal fats and in plant oils. Fatty acids may be extracted from olives, cotton seeds, soya beans, peanuts, sun flowers, coconuts palm, rapeseed, sesame oil, amaranth, corn, jatropha.

The fatty acid forming the surfactant may also be a synthetic fatty acid as well as a semi-synthetic (e.g. a natural fatty acid that underwent a modification).

In accordance with some embodiments, the at least one surfactant is one being recognized or is labeled as having an insecticide and/or fungicide activity. Without being limited thereto, pesticidal and/or fungicidal surfactants may include the commercial products Zohar PT-50 and Zohar LQ-215, both produced by Zohar Dalia, Israel.

In one particular embodiment, the surfactant is selected from Zohar PT-50 and Zohar LQ-215.

The compositions of these surfactants are available from Zohar Dalia. For instance, Zohar PT-50 is known to have the composition as shown in Table 1 below:

**Table 1: Surfactants compositions**

| **Vegetable oils** | | | | | | | |
|---|---|---|---|---|---|---|---|
| **Type** | **Saturated fatty acids** | **Mono-unsaturated fatty acids** | **Polyunsaturated fatty acids** | | | **Oleic acid (ω-9)** | **Smoke point** |
| | | | **Total poly** | **linolenic acid (ω-3)** | **Linoleic acid (ω-6)** | | |
| **Not hydrogenated** | | | | | | | |
| Canola (rapeseed) | 7.365 | 63.276 | 28.14 | 9-11 | 19-21 | - | 204°C |
| Coconut | 91.00 | 6.000 | 3.000 | - | 2 | 6 | 177°C |
| Corn | 12.948 | 27.576 | 54.67 | 1 | 58 | 28 | 232°C |
| Cottonseed | 25.900 | 17.800 | 51.90 | 1 | 54 | 19 | 216°C |
| Flaxseed/Lins eed (European) | 6-9 | 10-22 | 68-89 | 56-71 | 12-18 | 10-22 | 107°C |
| Olive | 14.00 | 72.00 | 14.00 | <1.5 | 9-20 | - | 193°C |
| Palm | 49.300 | 37.000 | 9.300 | - | 10 | 40 | 235°C |
| Peanut | 16.900 | 46.200 | 32.00 | - | 32 | 48 | 225°C |
| Safflower (>70% linoleic) | 8.00 | 15.00 | 75.00 | - | - | - | 210°C |
| Safflower (high oleic) | 7.541 | 75.221 | 12.82 | - | - | - | 210°C |
| Soybean | 15.650 | 22.783 | 57.74 | 7 | 50 | 24 | 238°C |
| Sunflower (<60% linoleic) | 10.100 | 45.400 | 40.10 | 0.200 | 39.800 | 45.300 | 227°C |
| Sunflower (>70% oleic) | 9.859 | 83.689 | 3.798 | - | - | - | 227°C |

| **Fully hydrogenated** | | | | | | | |
|---|---|---|---|---|---|---|---|
| Cottonseed (hydrog.) | 93.600 | 1.529 | .587 | | .287 | | |
| Palm (hydrogenated ) | 47.500 | 40.600 | 7.50 | | | | |
| Soybean (hydrogen.) | 21.100 | 73.700 | .400 | .096 | | | |
| Values as percent (%) by weight of total fat. | | | | | | | |

The amount of the surfactant in the first component may vary. However, in some embodiments, the particulate matter comprises between 5% to 10% w/w of the surfactant or combination of surfactants.

The first component, prior to mixing with the second component, comprises the particulate matter is in an essentially dry form. When referring to ***"essential dry"*** it is to be understood that the first component may contain low amounts of water, in some embodiments not more than 10% (w/w). In some other or additional embodiments, the water content in the first component is within the range of 1% to 7% (w/w). In yet some other embodiments, the *"essential dry"* is to be understood as encompassing no water being detected by conventional methods (i.e. no detectable amount of water).

The first component may also contain some trace amounts of an organic solvent. As will be further discussed below, a solvent may be required for the preparation of the particulate matter and some residual amounts may remain, as long as the solvent is not toxic. In some embodiments, the first component is either solvent free (i.e. contains no detectable amounts of an organic solvent) or comprises trace amount, i.e. not more than 5%, 4%, 3% or even 2% w/w organic solvent. The solvent is typically an organic volatile polar solvent, such as, without being limited thereto, a solvent selected from the group consisting of acetone, isopropyl alcohol (isopropanol, IPA), acetonitrile, acetone, ethanol and methanol. In some embodiments, trace amounts of alcohol are detected in the first component.

The particulate matter of the first component is unique in its capability of forming a stable emulsion, once the particulate matter is brought into contact with water or with the second component. This is achieved, inter alia, due to the presence of a surfactant in the first component. The surfactant is added to the particles with the oil, before bringing the components into dryness.

When referring to a ***stable emulsion*** it is to be understood as referring to dispersion of oil (the dispersed phase) in water (the dispersion medium) for a period of at least 1hour, at times, at least 2, 3, 4, 5, 10, 12 or even 24 hours following the formation of the emulsion. In other words, the stability is determined by the lack of separation into an oil phase and a water phase. The lack of separation may be determined by any means known in the art, including visible inspection.

To form the emulsion, the particulate matter is mixed with water or with the water contained in the second component. The amount of water depends on the amount of particulate matter. In some embodiments, for each gram of particulate matter (30% of which is oil) water is added to provide a one liter emulsion. As such, in a 1 liter emulsion, 0.1 gr particulate matter provides an oil concentration of 0.03% v/v). In some embodiments, the percentage of oil in the final emulsion is in the range of 0.03% and 2% v/v.

In some embodiments, the mixing of the particulate matter with water provides an emulsion with a droplet size in the range of between 1 to 20µm and in some embodiments in the range between 3 to 10µm.

In some embodiments, the emulsion is an anti-microbial emulsion.

Reverting to the second component, it poses an antagonistic activity. In the context of the present disclosure, when referring to antagonists of a microbial pathogen or a pathogen antagonist, it is to be understood as a biological entity that inhibits the plant pathogen (a plant pathogen may also be referred to as a phytopathogen). *Inhibiting,* in the context of the present disclosure is to be understood as reducing growth of the pathogen by at least 50%, at least 70%, at least 90% or even by essentially eliminating the pathogen. The plant pathogen, in the context of the present invention may be any prokaryotic or eukaryotic organism, including, without being limited thereto bacteria, a fungi, protozoa, nematodes, or any other disease causing parasite. As such, the microbial activity of the at least one antagonist, may any one of antibacterial, antifungal, antiprotoxoal, antinematodal etc.

The second component comprises at least one antagonistic bacteria and in some preferred embodiments, the second component comprises a cocktail of antagonists. The cocktail is to be understood as a combination of two or more, at times, 3, 4, 5, 6, 7, 8, 9, 10, 11, 12, 13, 14 or 15, antagonists combined together in the same or different concentrations.

In some embodiments, the at least one antagonist is of a type capable of growing on sesame oil as a sole carbon source. Such antagonists may be easily identified by conducting conventional cultivation assay using sesame as the sole carbon source and identifying those cultivars that survived the experimental growing period. Specifically, the antagonistic bacteria that may be used in accordance with the present disclosure is one that may be distinguished from other bacteria having no antagonistic activity towards at least *Clavibacter michiganensis subsp. Michiganensis* (*CBM*), the cause of tomato bacterial canker; or is one that is capable of growing on carbon base oil, such as sesame oil. In one embodiment, the carbon base oil on which all antagonistic bacteria grow (while non-antagonistic bacteria tested do not) is sesame oil.

In some embodiments, the antagonist may be referred to as a bacteriostate, i.e., that slows down growth of organisms, and in some other embodiments, the antagonist may be referred to as a bactriocide, namely, that kills the organism.

In some embodiments, the at least one antagonist of a microbial pathogen is a soil born antagonist. In this context it is to be understood that the at least one antagonist may be obtained and isolated from the roots, soil and/or rhizophere of a plant that was shown to be tolerant (e.g. partially resistant) or resistant to the microbial pathogen.

In some other embodiments, the at least one antagonist of a microbial pathogen is a plant derived antagonist, e.g. isolated from a plant part, such as the leaves, the stem, the flower, the vascular system.

The at least one antagonist of a microbial pathogen may also be present and thus derived from the soil (i.e. soil born) and from a plant part (e.g. the vascular system).

As noted above, the second component may include more than one antagonist. In some embodiments, the second component includes a combination of several antagonists in the same gel, i.e. a cocktail. However, in some other embodiments, when combinations of antagonists are to be used, they may each be carried by a separate gel and mixed only prior to use. When using a combination or two or more antagonistic bacteria, the combination is referred to herein as an antagonistic cocktail.

When a combination of antagonists is used, the antagonists may be provided/applied to the plant in the same amounts (CFU/ml) or in different amounts.

In accordance with some embodiments, the amount of an antagonist in the second component (either as a single antagonist or as a cocktail of antagonists) may be in the range between 500 to 5,000CFU/ml/. The ratio between the antagonists, when used as a cocktail may vary, depending on the type of pathogen to be treated and may be a priori determined by conventional laboratory methods, e.g. best bacteriostatic/bactriocidal effect in a cultivation dish.

In some embodiments, the preferred antagonists are selected from the group consisting of *Pseudomonas species (Accession No.* CBS133252), *Pseudomonas alcaliphila* (*Accession No.* CBS133254), *Bacillus subtilis* (*Accession No.* CBS133255), *Pseudomonas cedrina* (*Accession No.* CBS133256), *Pseudomonas species* (*Accession No.* CBS133257), *Pseudomonas species* (*Accession No.*CBS133258), *Pseudomonas species (Accession No.* CBS134568), *Pseudomonas spanius* (*Accession No.* CBS133259), *Pseudomonas mediterranea (Accession No.* CBS134566), *Pseudomonas chlororahis* (*Accession No.* CBS134567).

Other antagonists that may be used in combination with at least one antagonist listed above, are provided in Table 4 of the Report by the International Organization for Biological and Integrated Control of Noxious Animals and Plants [Edited by Philippe C. Nicot 2011],

In addition, antagonists to be combined with at least one preferred antagonist listed above, may be found in various literatures:

| **The Pathogen** | **The infected plant** | **The Antagonists** | **Source of information** |
|---|---|---|---|
| *Ralstonia Solanacearum* | Tomato, Pepper | *Bacillus megaterium, Enterobacter cloacae, Pichia guillermondii* and *Candida ethanolica* | Journal of Plant Pathology 92(2):395-406 (2010) |
| *E. carotovora* subsp. *carotovora* P-138 | | E-65 as a *Bacillus* sp. and E-45 as a *Lactobacillus* sp. | The Scientific World Journal (2012), Article ID 723293. |
| *Leptosphaeria maculans* | canola | *Pseudomonas chlororaphis* and *P. aurantiaca* | Biocontrol Science and Technology 16(5/6):567582 (2006) |
| *Ralstonia solanacearum (Pseudomonas solanacearum)* | Fungi in peanut | *Pseudomonas fluorescens* RH4003 and *Bacillus subtilis* AB89 | J. ISSAAS Vol. 18(1): 185-192 (2012) |
| *Ralstonia solanacearum* | Wilt disease of potato | *Pseudomonas solanacearum isolates: B82;w163;wp95 and P. fluorescens* | http://www.apsnet.org/publications/PlantDisease/BackI ssues/Documents/1983Arti cles/PlantDisease67n05_49 9.pdf |
| *Rhizoctonia solani* | potato | commercial products of Bacillus subtilis (Kodiak) | Crop Protection 24(11):939-950,(2005) |
| | | Actinomycetes | Phytoprotection 82:85-102 (2001) |
| *Xanthomonas oryzae* pv*.oryzae* | Bacterial Leaf Blight Disease in Rice | *Streptomyces spp* | American Journal of Agricultural and Biological Sciences 7(2):217-223 (2012) |
| *Xanthomonas oryzae* pv.*oryzae* | | Isolates from soil and water | Rice Indstry, culture, and environment 549-553 |
| *Streptomyces* spp | Potato scab | | Phytopathology 85:261-268 (1995); Can J Microbiol. 47(4):332-40 (2001) |
| *Sclerotinia sclerotiorum, Streptomyces* sp. and *Phytophthora capsici* | Soybeans Potato scab Vegetable crops | *Bacillus amyloliquefaciens* (BAC03) | MSU AgBioResearch 2011 Annual Report, (2012) URL: http://research.msu.edu/stor ies/getting-root-soil-borne-diseases |
| *Rhizoctonia solani* and *Fusarium sambucinum*, | Black Scurf Dry rot of Potato | | Egypt. J. Phytopathol., 36(1-2):45-56 (2008) |
| *Rhizoctonia solani* | Lettuce | Endophytic strains, *Serratia plymuthica* 3Re4-18 and *Pseudomonas trivialis* 3Re2-7, *rhizobacterium Pseudomonas fluorescens* L13-6-12 | FEMS Microbiol Ecol 64:106-116 (2008) |
| *Rhizoctonia solani* | Potato | *Pseudomonas fluorescens* | Acta biol.Colomb. 12(1) (2007) |
| *Xanthomonas campestris pv. vesicatoria* | Tomato | *Rahnella aquatilis* | Microbiological Research, 160(4):343-352 (2005) |
| *Erwinia amylovora* (Fire Blight) | | *Pseudomonas fluorescens* A506, *Pantoea agglomerans* C9-1, and *Pantoea* | Plant Disease 93(4):386 URL: http://apsjournals.apsnet.or g/doi/ pdf/10.1094/PDIS-93-4-0386 |
| *Erwinia amylovora* (Fire Blight) | | *Erwinia herbicola* | ISHS Acta Horticulturae 117: II Symposium on Fireblight URL: http://www.actahort.org/bo oks/117/117_21.htm |
| *Clavibacter michiganensis subsp. michiganensis* | | *Bacillus subtilis*; *Rhodosporidium diobovatum* | BioControl 49: 305-313, 2004 |

As noted above, in some embodiments, the antagonist is of a type that is capable of growing on sesame oil as a sole carbon source.

To prepare the emulsion, water may be added (in addition to the water from the gel). When water is added, the total amount of water will depend on the amount of the first component. In some embodiments, for each gram of first component (e.g. 30% of which are oil) water is added to provide one liter emulsion. As such, in 1 liter emulsion, 0.1 gr particulate matter provides an oil concentration of 0.03% v/v.

In some embodiments, the percentage of oil in the final emulsion is in the range of 0.03% and 2% v/v.

According to the above, a final formulation may be provided from 20 grams of a powder of the first component (30% of which is the oil), and 120 ml of an antagonist gel of the second component and mixing the first component and the second component with water to form 20 liter emulsion containing 0.3%v/v of oil.

Similarly, a formulation may be provided from 50 grams or 100 grams of a powder of the first component, and 120 ml of an antagonist gel of the second component and mixing the first component and the second component with water to form a 50 or 100 liter emulsion.

The biocontrol formulation prepared from the first component and second component described in detail above is used, in accordance with the present disclosure, for treatment or prevention of an epidemic spread of infection by even a single seed borne infected seed.

### DESCRIPTION OF NON-LIMITING EXAMPLES

### Example 1: Preparing Biocontrol Formulation

The composition for biocontrol of the eggs was prepared by mixing two components, dry particulate matter and an antagonistic bacterial cocktail.

### Preparation of Essential Oil Powder

### Materials

For preparing the oil powder, the following materials were used:

### Natural oils:

Oregano oil 100% (essential oil) and Sesame oil 100% (carbon-base oil), both purchased from *Makes Scents Natural SPA line,* Lancaster PA, USA.

### Surfactants:

Carvacrol purchased from Sigma-Aldrich.

### Silica beads:

Sipernat 50S (SiO₂, 20 µm) purchased from Evonik Industries AG.

### Solvent:

Isopropanol (IPA), Gadot

### Methods

For laboratory scale production the powders containing the natural oils, surfactants and the silica beads were prepared using common lab glassware set up including laboratory bottles of 20-50ml sizes, spatulas, magnetic stirrers and heating plates. Generally, the natural oil was weight and each was separately mixed with the selected surfactant in a 20ml vial, to which the solvent was added. The mixtures of each oil were mixed and heated to a temperature of about 40°C until homogeneous solutions were obtained. To the homogenous solutions the silica beads were added until the liquid was absorbed by the beads. The bottles were left in the fuming hood overnight until all solvent has evaporated.

Loading of each of the oil in the final dry powders was 30-42%. The dry powders contained 2%-7% water.

Alternative formulations for the oil powder are described in detail in International patent application No. PCT/IL2014/050348 bearing the publication number WO2014/170894.

### Preparation of antagonistic cocktail

### Materials

The antagonistic cocktail comprises, as the active principle, a mixture of soil borne bacteria. The isolation, identification and media condition for production are described in detail in International patent application No. PCT/IL2014/050348 bearing the publication number WO2014/170894.

Table 2 provides the list of species deposited at the CBS-KNAW institute on November 19, 2012 and used in the final combination/cocktail. The species were stored at -80°C in a glycerol solution (15%).

**Table 2: Deposited antagonists**

| Antagonist | Accession No. | Name |
|---|---|---|
| *Pseudomonas species* | CBS133252 | BN12-27A |
| *Pseudomonas alcaliphila* | CBS133254 | BN12-28 |
| *Bacillus subtilis* | CBS133255 | BN12-29 |
| *Pseudomonas cedrina* | CBS133256 | BN12-30 |
| *Pseudomonas species* | CBS133257 | BN-12-31 |
| *Pseudomonas species* | CBS133258 | BN12-32 |
| *Pseudomonas spanius* | CBS133259 | BN12-33 |
| *Pseudomonas mediterranea AN1* | CBS134566 | BN13-01 |
| *Pseudomonas chlororahis AN10* | CBS134567 | BN13-02 |
| *Pseudomonas species AN21* | CBS134568 | BN13-03 |

### Methods

### Preparing antagonistic microbial gel

The isolated antagonists listed in Table 2 were separately transferred to Erlenmeyer flask containing the medium used for multiplication (peptone (10 gr/litre), yeast extract (20 gr/litre), glycerol (10 gr/litre), MgSO₄ (0.1 gr/litre), CaCO₃ (2 gr/litre) supplemented with 0.15% granulated Agar (Difco) and each antagonist at a concentration of between 10⁷ to 10⁸ CFU/ml and shaked for 72 h at 28°C. The resulting gel like cocktail was then kept in gel form, at room temperature until use. It has been shown that the antagonists can be preserved in this form for up to 12 months with a decrease in the bacterial population in logarithmic order of no more than 2.

### Bacteria long term storage

The antagonistic bacteria were maintained in the form of an agar containing media that was found to support long term (294 days) survival of the antagonistic bacteria.

Each of the antagonistic bacteria listed in Table 2 is also characterized by their capability to survive a long term cultivation period with oregano oil being the soil carbon source.

### Preparation of biocontrol formulation

The biocontrol formulation was prepared by mixing the dry particulate matter carrying the oregano oil and sesame oil, with the agar gel carrying 10⁷-10⁸ CFU/ml for each bacterium in the cocktail. Then, the mixture was diluted with water to obtain a concentration of each bacteria in the range of 10³⁻10⁵ CFU/ml and concentration of particulate matter from 0.02% - 1% (w/v liquid).

After the oil particulate matter and bacterial cocktail are mixed with an amount of water to the predefined concentration (in the above defined range), the biocontrol cocktail was prepared and ready for use. The *ready for use* formulation may be maintained for a period of 12 hours from its preparation.

### Example 2: Biocontrol of Seedlings

### Treatment of Seedlings

Seedlings of different botanical families (250 seedlings/tray in four replications, see Table 3 below) and at their very beginning stage of germination, were prepared in commercial nursery trays. The trays were incubated under mist condition (free water on the cotyledons and on the first leaf). At the physiological stage of 2 cotyledons and about break- through of the first leaf (exposure of the shoot apical meristem and the *plumule* to form the first *true leaves* of the young plant), the trays were sprayed with the formulation, about 15ml/m² prepared as described above.

The second time for spray was 3 days after the first spray. The last spray was 2 days before planting, which is specific for each type of plant.

As control, seedlings of same botanical families were similarly sprayed, albeit with water only.

### Results

In all the experiments a few seedlings in the tested and control groups were infected due to inherent, seed borne, pathogenic bacteria.

At the control (non treated trays), epidemic areas were observed whereas at most of the treated trays no pathogen symptoms were observed. The results are summarized in Table 2 below (statistically significant values), making reference to the relevant Figure No. showing the differences between treated and non-treated seedlings.

**Table 3: Effect of Treatment**

| **The crop** | **No. of primary¹ infested seedlings** | | **Figure No.** |
|---|---|---|---|
| | **Control trays** | **Treated trays** | |
| Pepper | 3 | 0 | 1A-1B |
| Tomato | 4 | 0 | 2A-2B |
| Egg-plant | 1 | 0 | 3A-3B |
| Cabbage | 6 | 0 | 4 |
| Kohlrabi | 7 | 0 | 5 |
| Broccoli | 5 | 0 | 6A-6B |
| Cauliflower | 11 | 1 | 7A-7B |
| Melon | 3 | 0 | 8A-8B |
| Pumpkin | 6 | 1 | 9A-9B |
| Lettuce | 2 | 0 | 10 |

| | | | |
|---|---|---|---|
| ¹ Primary infested seedlings means that the pathogen is seed borne or seed transmitted | | | |

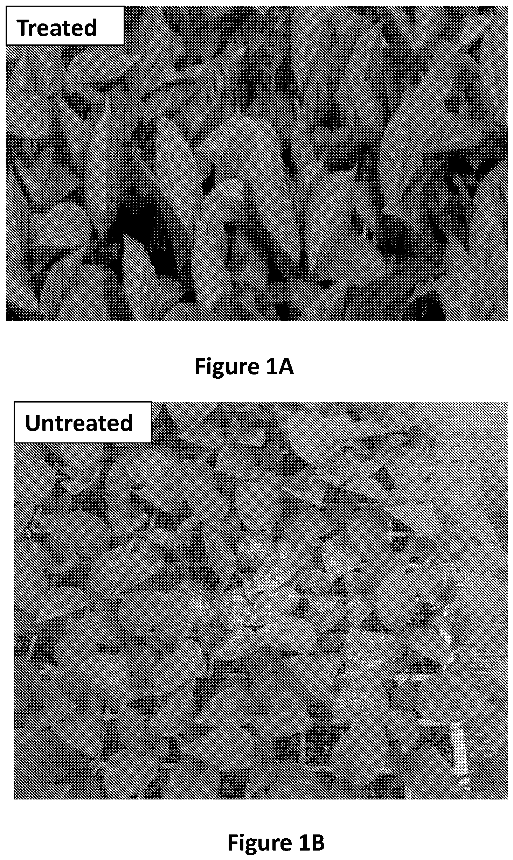

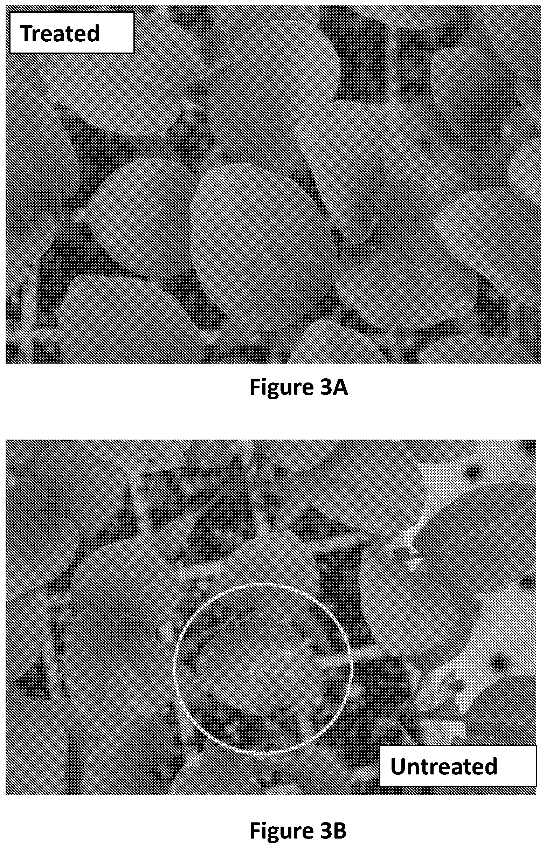

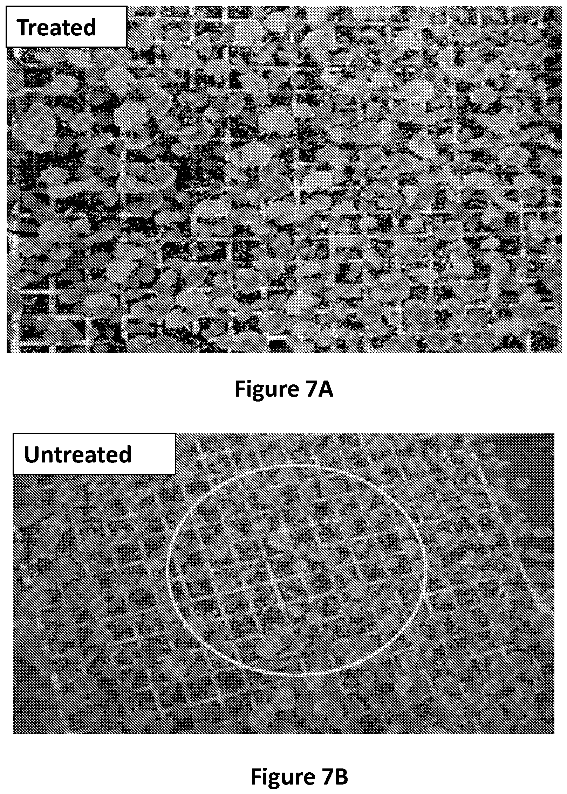

All Figures clearly show that the treated seedlings are much more vigor as compared to the control seedlings. In some of the Figures the source of the seed borne disease is circled by a star shape. Specifically, Figure 1B shows the spreading of *Xanthomonas campestris* pv. *vesicatoria* from a naturally infested pepper seed (stared area); Figure 3B shows the spreading *Xanthomonas* spp. in egg plant seedling; Figure 7B shows the spreading of *Xanthomonas campestris* pv. *campestris* from a naturally infested Cauliflower seed.

In a further experiment, the effect of exposing tomato seedlings to a third amount of the formulation only two days before planting at commercial green house was also determined. To this end, tomato seedlings grown in a nursery were divided into 6 groups of 300 seedlings each. Each group was treated as follow:
*Untreated Group:* Group that was not treated nor artificially infected with a pathogen;
*Copper Group:* Group treated by spraying with a commercial copper fungicide Kocide® 101fungicide/bactericide Wettable Powder (active Ingredient copper Hydroxide 77.0%)
*Group I:* Group being treated by spraying with the biocontrol formulation prepared as described above at a concentration of particulate matter of 0.02%.
*Group II:* Group being artificially infected by spraying with *Pseudomonas syringae pv.* tomato (10⁷CFU/ml) and without being treated with the formulation of the present invention.
*Group III:* Group being treated with the commercial copper fungicide of the Coper group and artificially infected by Spraying with Pseudomonas syringae pv. tomato (10⁷CFU/ml)
*Group IV:* Group being treated with the formulation 0.02% (as in Group I) and artificially infected by spraying Pseudomonas syringae pv. tomato (10⁷CFU/ml).
The results of the various treatments are summarized in Table 4:

**Table 4: Comparison treatment groups**

| **Group** | **Infected plants (%)** |
|---|---|
| *Untreated Group* | 0.67 |
| *Copper Group* | 1.00 |
| *Group I* | 0.00 |
| *Group II* | 68.67 |
| *Group III* | 54.67 |
| *Group IV* | 1.33 |

As shown in **Table 4,** under field condition (i.e. after planting in the commercial greenhouse) the treatment with the copper based fungicide had no affect on the % of infected seedlings, as compared to the untreated group.

Pre- inoculation by spraying with Pseudomonas syringae pv. tomato (10⁷CFU/ml) was successful, as shown by the increase in infected seedlings as compared to the untreated group.

Further, treatment with the commercial fungicide was not sufficiently effective in reducing level of infection (group III), while the treatment with the formulation disclosed herein significantly reduced incidences of infection (Group IV) and thus was determined as an effective biocontrol treatment for preventing spread of the disease.

All the nursery treatments for vegetable seedlings of the different botanical families were in the range of 0.02% to 2.0% of the solid formulation in the complex (Wight / volume) whereas the bacterial cocktail concentration remained constant - not less than 5X10³ CFU/ml at the spray tank mixes. Each variety has the optimal concentration according to the pathogens and its phytotoxicity responds.

At the following experiments all the seedlings were treated at the same concentration of 0.6% of the solid particulate matter in the complex (Weight / volume) and the cocktail of bacteria was in the range of 8X10³ to 1X104 CFU/ml at the spray tank mixes.

Specifically, seedlings were treated by spraying with the biocontrol formulation prepared as described above at a concentration of particulate matter of 0.6% at the stage of two emerging cotyledons with the aim of stopping a bacterial epidemic. As control, none treated seedlings were observed. Seed borne bacterial epidemics begin from a primary source of inoculum - a seedling containing seed borne pathogenic bacteria. The same seedlings were treated a second time two days after the first treatment, at the appearance of the first leaf. A third treatment was applied two days before the seedling was ready for market (to ensure protection during planting phase in greenhouse or field).

**Table 5A - Disease index after two treatments**

| **Crop** | **Pathogen*** | **Control**** | **Treated Group**** |
|---|---|---|---|
| Pumpkin | *Pseudomonassyringae* | 6 | 10 |
| Lettuce | *Erwinia carotovora* | 7 | 10 |
| Dill | *Erwinia carotovora* | 3 | 10 |
| Onion | *Erwinia carotovora*; | 6 | 10 |
| | *Pseudomonas spp.* | *** | *** |
| Parsley | *Xanthomonas spp.* | 7 | 10 |
| Tomato | *Pseudomonas tomato*; | 3 | 9 |
| | *X. vesicatoria*; | 7 | 10 |
| | *Clavibacter.* | 5 | 10 |
| Cabbage | *X. campestis.* | 4 | 10 |
| Cauliflower | *X. campestis.* | 6 | 10 |
| Broccoli | *X. campestis.* | 8 | 10 |
| Kohlrabi | *X. campestis.* | 2 | 10 |
| Cucumber | *Pseudomonas. syringae* | 7 | 10 |
| Melon | *Xanthomonas spp.* | 8 | 10 |
| | *Acidovorax.* | 3 | 10 |
| | *Pseudomonas. spp* | 7 | 10 |
| Water melon | *Acidovorax* | 6 | 10 |

| | | | |
|---|---|---|---|
| * The pathogens were isolated and identified in the laboratory. ** Disease Index for the seedling trays is: 10 = disease free; 0 = 100% infested seedlings *** no pathogen detected | | | |

**Table 5B - Infected plants (%) after two treatments**

| **Crop** | **Pathogen*** | **Control** | **Treated Group** |
|---|---|---|---|
| Pumpkin | *Pseudomonas syringae* | 12% | 1% |
| Lettuce | *Erwinia carotovora* | 14% | 0% |
| Dill | *Erwinia carotovora* | 24% | 0% |
| Onion | *Erwinia carotovora* | 9% | 0% |
| | *Pseudomonas spp.* | 36% | 1% |
| Parsley | *Xanthomonas spp.* | 2% | 0% |
| Tomato | *Pseudomonas tomato;* | 6% | 0% |
| | *X. vesicatoria;* | 4% | 0% |
| | *Clavibacter.* | 0% | 0% |
| Cabbage | *X. campestis.* | 11% | 0% |
| Cauliflower | *X. campestis.* | 22% | 1% |
| Broccoli | *X. campestis.* | 7% | 0% |
| Kohlrabi | *X. campestis.* | 34% | 1% |
| Cucumber | *Pseudomonas. syringae* | 8% | 0% |
| Melon | *Xanthomonas spp.* | 0% | 0% |
| | *Acidovorax.* | 6% | 0% |
| | *Pseudomonas. spp* | 2% | 0% |
| Water melon | *Acidovorax* | 8% | 0% |

| | | | |
|---|---|---|---|
| * The pathogens were isolated and identified in the laboratory. | | | |

The third treatment, given two 2 days before shipping to the market, was done on 100 seedlings of each crop which were then planted in a commercial screen house.

**Table 6 - Infected plants (%) after third treatment and planting in commercial plots**

| **Crop***** | **Pathogen*** | **Control**** | **Treated Group**** |
|---|---|---|---|
| Onion | *Erwinia carotovora;* | *9% | 0% |
| | *Pseudomonas spp.* | 36% | 0% |
| Tomato | *Pseudomonas tomato;* | 6% | 0% |
| | *X. vesicatoria;* | 4% | 0% |
| Cabbage | *X. campestis;* | 11% | 0% |
| Cauliflower | *X. campestis;* | 22% | 0% |
| Broccoli | *X. campestis;* | 7% | 0% |
| Kohlrabi | *X. campestis;* | 34% | 0% |
| Cucumber | *P. syringae* | 8% | 0% |

| | | | |
|---|---|---|---|
| *Pathogens were isolated and identified in the laboratory. **Percentages indicate plants with symptoms where the pathogen was identified. ***One hundred plants of each crop were planted. | | | |

The results showed no disease development during 30 days after planting.

## Claims

1. A method for preventing spread of a seed associated disease within a population of seedlings, the method comprises:
providing a formulation obtained by mixing, until an emulsion is formed, of at least:
**(a)** a first component comprising particulate matter holding one or more natural oils; and
**(b)** a second component comprising a bacterial cocktail of at least two antagonistic bacteria; and
providing an amount of said formulation to said seedlings.

2. The method of Claim 1, wherein said mixing is at most 48 hours prior to providing of said formulation to the seedlings.

3. The method of Claims 1 or 2, comprising providing said formulation by at least one of (i) spraying the seedlings, (ii) irrigating the seedlings with the formulation, said providing is preferably (i) least once at a physiological stage of said seedlings of 1-2 cotyledons and/or (ii) at least once from day of germination until plant maturation.

4. The method of any one of Claims 1 to 3, comprising cultivating said seedlings from germination under controlled environmental conditions, such as within a plant nursery.

5. The method of any one of Claims 1 to 4, wherein said particulate matter comprises silica (SiO₂) and is **characterized by** at least one of:
-it has a size distribution in the range of 10-25µm;
it has a surface area in the range of 400-500m² N₂/g; and
it has an oil capacity in the range of 300-350 DBP/100 gram particulate.

6. The method of any one of Claims 1 to 5, wherein said natural oil is plant oil, preferably a plant oil that comprises at least one essential oil, such as Oregano oil, or said plant oil is carbon-rich nutrient oil.

7. The method of any one of Claims 2 to 6, wherein the particulate matter has between 20% to 50% w/w of natural oil prior to mixing with said second component.

8. The method of any one of Claims 2 to 7, wherein said formulation comprises at least one surfactant, preferably in said first component, said surfactant being preferably one that comprises potassium salt of fatty acids.

9. The method of any one of Claims 2 to 8, wherein said second component is in a form of a gel holding the cocktail of at least two antagonistic bacteria, said second component preferably comprising at least one gel forming polysaccharide.

10. The method of any one of Claims 1 to 9, wherein the antagonistic bacteria comprises a soil borne bacterium or comprises a bacterium isolated from a plant part.

11. The method of any one of Claims 1 to 10, wherein said formulation comprises between 10⁷ to 10⁹ CFU/ml of each bacterium of said cocktail.

12. The method of any one of Claims 1 to 11, wherein said formulation comprises at least one antagonist is a bacterium selected from the group consisting of *Pseudomonas species (Accession No.* CBS133252), *Pseudomonas alcaliphila* (*Accession No.* CBS133254), *Bacillus subtilis* (*Accession No.* CBS133255), *Pseudomonas cedrina* (*Accession No.* CBS133256), *Pseudomonas species* (*Accession No.* CBS133257), *Pseudomonas species* (*Accession No.*CBS133258), *Pseudomonas species (Accession No.* CBS134568), *Pseudomonas spanius* (*Accession No.* CBS133259), *Pseudomonas mediterranea (Accession No.* CBS134566), *Pseudomonas chlororahis* (*Accession No.* CBS134567).

13. The method of any one of Claims 1 to 12, wherein said providing of said formulation is to seedlings of a vegetable plant, such as a vegetable plant selected from the group of plant families consisting of Amaryllidaceae, Brassicaceae, Chenopodiaceae, Compositae, Cucurbitaceae, Gramineae, Leguminosae, Solanaceae, and Umbelliferae.

14. The method of Claim 12 or 13, wherein said providing of said formulation is to a population of seedlings suspected of having at least one seedling infected with a seed associated disease or being at risk of being infected with a seed associated disease, said seed associated disease being preferably one that is caused by a pathogen selected from *Enterobacteriaceae; Pseudomonadaceae; Xanthomonas* such as *xanthomonas vesicatoria* (XV); *Ralstonia, Acidovorax, Rhizobiaceae Agrobacterium; Clavibacter* such as *Clavibacter michiganensis subsp. Michiganensis* (CBM); *Streptomyces* such as *Streptomyces scabies* (S. Scabies); *Clostridium and Bacillus.*

## Patentansprüche

1. Verfahren zum Verhindern einer Ausbreitung einer mit Saatgut assoziierten Krankheit innerhalb einer Population von Keimlingen, wobei das Verfahren Folgendes umfasst:
Bereitstellen einer Formulierung, die durch Mischen, bis eine Emulsion gebildet ist, von mindestens Folgendem erlangt wird:
(a) einer ersten Komponente, die Feststoffteilchen umfasst, die ein oder mehrere natürliche Öle enthalten; und
(b) einer zweiten Komponente, die einen Bakteriencocktail aus mindestens zwei antagonistischen Bakterien umfasst; und
Bereitstellen einer Menge der Formulierung an die Keimlinge.

2. Verfahren nach Anspruch 1, wobei das Mischen höchstens 48 Stunden vor Bereitstellen der Formulierung an die Keimlinge erfolgt.

3. Verfahren nach Anspruch 1 oder 2, umfassend ein Bereitstellen der Formulierung durch mindestens eines von (i) Besprühen der Keimlinge, (ii) Berieseln der Keimlinge mit der Formulierung, wobei ein Bereitstellen vorzugsweise (i) mindestens einmal in einem physiologischen Stadium der Keimlinge von 1-2 Kotyledonen und/oder (ii) mindestens einmal vom Tag der Keimung bis zur Pflanzenreifung erfolgt.

4. Verfahren nach einem der Ansprüche 1 bis 3, umfassend ein Kultivieren der Keimlinge aus der Keimung unter kontrollierten Umgebungsbedingungen, wie beispielsweise in einer Pflanzenschule.

5. Verfahren nach einem der Ansprüche 1 bis 4, wobei die Feststoffteilchen Siliziumdioxid (SiO₂) umfassen und durch mindestens eines der Folgenden gekennzeichnet sind:
- sie haben eine Größenverteilung im Bereich von 10-25 µm;
sie weisen eine Oberfläche im Bereich von 400-500 m² N₂/g auf; und
sie haben eine Ölkapazität im Bereich von 300-350 DBP/100 Gramm Partikel.

6. Verfahren nach einem der Ansprüche 1 bis 5, wobei das natürliche Öl Pflanzenöl ist, vorzugsweise ein Pflanzenöl, das mindestens ein ätherisches Öl, wie beispielsweise Oreganoöl, umfasst, oder das Pflanzenöl kohlenstoffreiches Nährstofföl ist.

7. Verfahren nach einem der Ansprüche 2 bis 6, wobei die Feststoffteilchen zwischen 20 und 50 Gew.-% natürliches Öl aufweisen, vor einem Mischen mit der zweiten Komponente.

8. Verfahren nach einem der Ansprüche 2 bis 7, wobei die Formulierung mindestens ein Tensid umfasst, vorzugsweise in der ersten Komponente, wobei das Tensid vorzugsweise eines ist, das Kaliumsalz von Fettsäuren umfasst.

9. Verfahren nach einem der Ansprüche 2 bis 8, wobei die zweite Komponente in Form eines Gels vorliegt, das den Cocktail aus mindestens zwei antagonistischen Bakterien enthält, wobei die zweite Komponente vorzugsweise mindestens ein gelbildendes Polysaccharid umfasst.

10. Verfahren nach einem der Ansprüche 1 bis 9, wobei die antagonistischen Bakterien ein Bodenbakterium umfassen oder ein aus einem Pflanzenteil isoliertes Bakterium umfassen.

11. Verfahren nach einem der Ansprüche 1 bis 10, wobei die Formulierung zwischen 10⁷ und 10⁹ CFU/ml von jedem Bakterium des Cocktails umfasst.

12. Verfahren nach einem der Ansprüche 1 bis 11, wobei die Formulierung mindestens einen Antagonisten umfasst, der ein Bakterium ist, ausgewählt aus der Gruppe bestehend aus *Pseudomonas-Gattung (Zugangs-Nr.* CBS133252), *Pseudomonas alcaliphila (Zugangs-Nr.* CBS133254), *Bacillus subtilis (Zugangs-Nr.* CBS133255), *Pseudomonas cedrina (Zugangs-Nr.* CBS133256), *Pseudomonas-Gattung (Zugangs-Nr.* CBS133257), *Pseudomonas-Gattung (Accession Nr.* CBS133258), *Pseudomonas-Gattung (Zugangs-Nr.* CBS134568), *Pseudomonas spanius (Zugangs-Nr.* CBS133259), *Pseudomonas mediterranea (Zugangs-Nr.* CBS134566), *Pseudomonas chlororahis (Zugangs-Nr.* CBS134567).

13. Verfahren nach einem der Ansprüche 1 bis 12, wobei das Bereitstellen der Formulierung an Keimlinge einer Gemüsepflanze, wie beispielsweise einer Gemüsepflanze, ausgewählt aus der Gruppe von Pflanzenfamilien, bestehend aus Amaryllidaceae, Brassicaceae, Chenopodiaceae, Compositae, Cucurbitaceae, Gramineae, Leguminosae, Solanaceae und Umbelliferae erfolgt.

14. Verfahren nach Anspruch 12 oder 13, wobei ein Bereitstellen der Formulierung an eine Population von Keimlingen ist, von denen vermutet wird, dass sie mindestens einen Keimling haben, der mit einer samenassoziierten Krankheit infiziert ist, oder mit einer samenassoziierten Krankheit infiziert zu sein droht, wobei die samenassoziierte Krankheit vorzugsweise eine ist, die durch einen Krankheitserreger verursacht wird, der aus *Enterobacteriaceae; Pseudomonadaceae; Xanthomonas* such as *xanthomonas vesicatoria* (XV); *Ralstonia, Acidovorax, Rhizobiaceae Agrobacterium; Clavibacter* such as *Clavibacter michiganensis* Untergattung *Michiganensis* (CBM); *Streptomyces,* wie beispielsweise *Streptomyces scabies* (S. Scabies); *Clostridium* und *Bacillus* ausgewählt ist.

## Revendications

1. Procédé de prévention de propagation d'une maladie associée aux semences dans une population de semis, le procédé comprenant :
la fourniture d'une formulation obtenue par le mélange, jusqu'à la formation d'une émulsion, d'au moins :
**(a)** un premier composant comprenant une matière particulaire contenant au moins une huile naturelle ; et
**(b)** une deuxième composant comprenant un cocktail bactérien d'au moins deux bactéries antagonistes ; et
la fourniture d'une quantité de ladite formulation auxdits semis.

2. Procédé de la revendication 1, dans lequel ledit mélange a lieu au moins 48 heures avant la fourniture de ladite formulation aux semis.

3. Procédé de la revendication 1 ou 2, comprenant la fourniture de ladite formulation par au moins une action parmi (i) la pulvérisation des semis, (ii) l'irrigation des semis avec la formulation, ladite fourniture étant de préférence (i) au moins une fois à un stade physiologique desdits semis de 1 à 2 cotylédons et/ou (ii) au moins une fois à partir du jour de germination jusqu'à maturation de plant.

4. Procédé de l'une quelconque des revendications 1 à 3, comprenant la culture desdits semis à partir de la germination dans des conditions environnementales contrôlées, telles que dans une pépinière.

5. Procédé de l'une quelconque des revendications 1 à 4, dans lequel ladite matière particulaire comprend de la silice (SiO₂) et est **caractérisée par** au moins l'un des éléments suivants :
elle présente une distribution de taille dans la plage de 10 à 25 µm ;
elle présente une surface spécifique dans la plage de 400 à 500 m²N₂/g ; et
elle présente une capacité en huile dans la plage de 300 à 350 DBP/100 grammes de particules.

6. Procédé de l'une quelconque des revendications 1 à 5, dans lequel ladite huile naturel est une huile végétale, de préférence une huile végétale qui comprend au moins une huile essentielle, telle que l'huile d'origan, ou ladite huile végétale est une huile nourrissante riche en carbone.

7. Procédé selon l'une quelconque des revendications 2 à 6, dans lequel la matière particulaire comprend entre 20 % et 50 % p/p d'huile naturelle avant le mélange avec ledit deuxième composant.

8. Procédé de l'une quelconque des revendications 2 à 7, dans lequel ladite formulation comprend au moins un agent tensioactif, de préférence dans ledit premier composant, ledit agent tensioactif étant de préférence un agent qui comprend un sel potassique d'acides gras.

9. Procédé selon l'une quelconque des revendications 2 à 8, dans lequel ledit deuxième composant se présente sous la forme d'un gel contenant le cocktail d'au moins deux bactéries antagonistes, ledit deuxième composant comprenant de préférence au moins un polysaccharide gélifiant.

10. Procédé de l'une quelconque des revendications 1 à 9, dans lequel les bactéries antagonistes comprennent une bactérie terricole ou comprennent une bactérie isolée à partir d'une partie de plante.

11. Procédé de l'une quelconque des revendications 1 à 10, dans lequel ladite formulation comprend entre 10⁷ à 10⁹ CFU/ml de chaque bactérie dudit cocktail.

12. Procédé de l'une quelconque des revendications 1 à 11, dans lequel ladite formulation comprend au moins un antagoniste qui est une bactérie choisie dans le groupe constitué par *Pseudomonas species* (*n° d'accession* CBS133252), *Pseudomonas alcaliphila* (*n° d'accession* CBS133254), *Bacillus subtilis* (*n° d'accession* CBS133255), *Pseudomonas cedrina* (*n° d'accession* CBS133256), *Pseudomonas species* (*n° d'accession* CBS133257), *Pseudomonas species* (*n° d'accession* CBS133258), *Pseudomonas species* (*n° d'accession* CBS134568), *Pseudomonas spanius* (*n° d'accession* CBS133259), *Pseudomonas mediterranea* (*n° d'accession* CBS134566), *Pseudomonas chlororahis* (*n° d'accession* CBS134567).

13. Procédé de l'une quelconque des revendications 1 à 12, dans lequel ladite fourniture de ladite formulation est destinée à des semis d'une plante potagère, telle qu'une plante potagère choisie dans le groupe des familles végétales constitué par Amaryllidaceae, Brassicaceae, Chenopodiaceae, Compositae, Cucurbitaceae, Gramineae, Leguminosae, Solanaceae et Umbelliferae.

14. Procédé de la revendication 12 ou 13, dans lequel ladite fourniture de ladite formulation est destinée à une population de semis soupçonnée de posséder au moins un semi infecté par une maladie associée aux semences et risquant d'être infecté par une maladie associée aux semences, ladite maladie associée aux semences étant de préférence une maladie qui est causée par un pathogène choisi parmi *Enterobacteriaceae ; Pseudomonadaceae ; Xanthomonas* tel que *xanthomonas vesicatoria* (XV) ; *Ralstonia, Acidovorax, Rhizobiaceae Agrobacterium ; Clavibacter* tel que *Clavibacter michiganensis subsp. Michiganensis* (CBM) ; *Streptomyces* tel que *Streptomyces scabies* (S. scabies) ; *Clostridium* et *Bacillus.*
